# EUROPÄISCHE PATENTSCHRIFT

(11) **EP 1 329 482 B1**
(45) Veröffentlichungstag und Bekanntmachung des Hinweises auf die Patenterteilung: **09.11.2005**
(21) Anmeldenummer: 03000036.8
(22) Anmeldetag: 07.01.2003
(51) Int. Cl.: C09B 23/14

(54) **Verfahren zur Herstellung von Styrylverbindungen**
Process for the preparation of styryl compounds
Procédé pour la préparation de composés du type styryle

(30) Priorität: 18.01.2002 DE 10201760
(43) Veröffentlichungstag der Anmeldung: 23.07.2003
(73) Patentinhaber: LANXESS Deutschland GmbH, 51369 Leverkusen (DE)
(72) Erfinder: Stawitz, Josef-Walter, Dr., 51519 Odenthal (DE); Feldhues, Ulrich, Dr., 51465 Bergisch Gladbach (DE)

(56) Entgegenhaltungen:
- EP-A- 0 545 415
- EP-A- 1 130 052
- EP-A- 1 293 538
- CH-A- 351 358
- DE-A- 1 800 507
- DE-B- 1 245 005
- US-A- 3 386 491
- US-A- 3 920 720
- US-A- 4 006 178

## Beschreibung

Die Erfindung betrifft ein neues Verfahren zur Herstellung von Styrylverbindungen, die Verwendung so hergestellter Styrylverbindungen zum Massefärben von Kunststoffen und zum Färben und Bedrucken hydrophober Fasermaterialien.

Gemäß CH-A-56 9055 sind Styrylfarbstoffe bereits zum Färben von Polyesterfasern, aber auch zum Massefärben spezieller Kunststoffe beschrieben.

In EP-A 545 415, DE-A 1 800 507, US-A 4 006 178, US-A 3 386 491 und DE-B 1 245 005 werden Styrylfarbstoffe zum Einfärben von Textilfasern wie beispielsweise Polyester oder Polyamid beschrieben.

Gemäß EP-A 1 130 052 und CH-A 351 358 wird das Massefärben von Kunststoffen mit Styrylfarbstoffen beschrieben.

EP-A 1 293 538 offenbart ein Verfahren zur Herstellung von Styrylfarbstoffen in Gegenwart von Butanol.

Die Herstellung dieser Farbstoffe nach dem Verfahren gemäß CH-A-56 9055 ist jedoch aufwendig.

Zunächst wird nach Vilsmeier mit Dimethylformamid/Phosphoroxychlorid und anschließender Neutralisation der Aldehyd des Anilin-Derivats hergestellt und anschließend in einem Lösungsmittel mit einer geeigneten methylenaktiven Verbindung zum Styryl-Farbstoff kondensiert.

Die für die Herstellung dieser Farbstoffklasse nötigen Apparaturen sind in der Technik aufwendig, die Synthesezeit über alle Stufen ist sehr lang und die Abwässer sind stark salzhaltig.

Aufgabe der vorliegenden Erfindung ist es daher, ein einfaches Verfahren zur Herstellung von Styrylfarbstoffen bereitzustellen, das die Nachteile des Standes der Technik nicht mehr aufweist.

Es wurde ein Verfahren zur Herstellung von Styrylverbindungen der Formel (I) gefunden 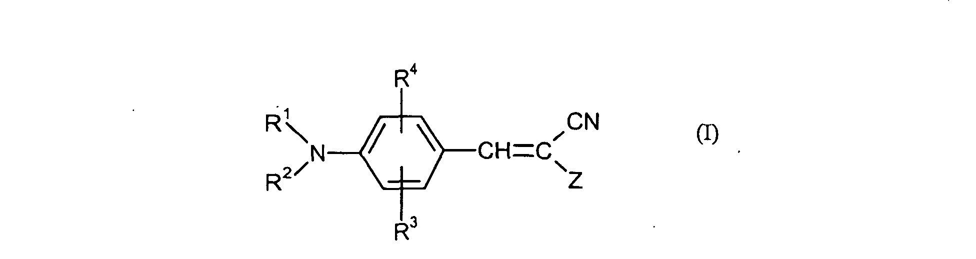 insbesondere der Formel (Ia) 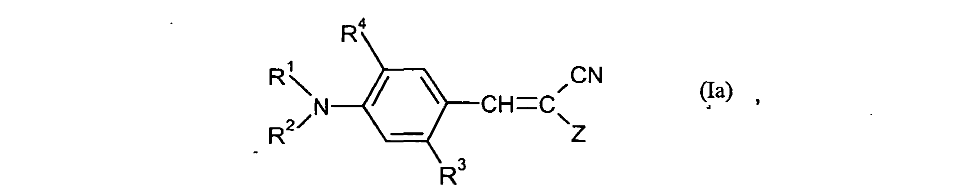 ganz besonders bevorzugt der Formel (Ib) 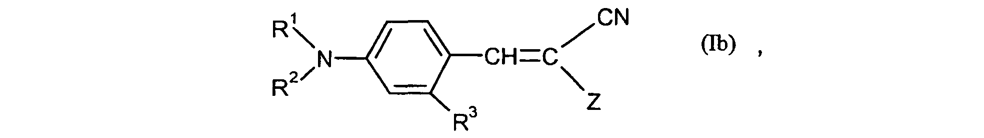 worin
- R¹ und R²: unabhängig voneinander für C₁-C₁₂-Alkyl stehen, die durch Halogen wie F, Cl, Br, Hydroxy, Cyano, -OR⁵, SR⁵, 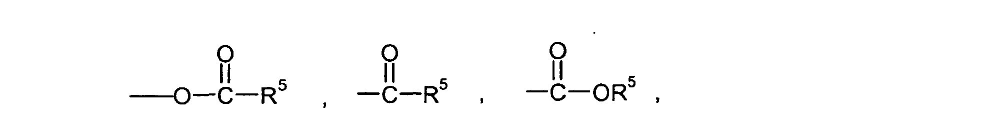 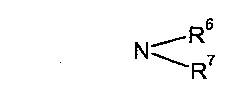 oder NH-CH₂-R⁵ ,
substituiert sein können, oder für gegebenenfalls substituierte Alkoxylate, vorzugsweise solche der Formel 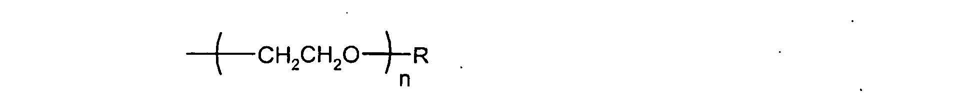 worin
- R: für H oder gegebenenfalls substituiertes Phenyl, insbesondere durch Halogen vorzugsweise Cl oder F, C₁-C₈-Alkyl und/oder C₁-C₈-Alkoxy substituiertes Phenyl, und
- n: für eine Zahl von 1 bis 50, insbesondere 1 bis 20 stehen,
insbesondere solche der Ethylenoxide mit einem durchschnittlichen Alkoxylierungsgrad von 1 bis 50, vorzugsweise von 1 bis 20 stehen, oder
- R¹: für den Rest der Formel (III) steht, 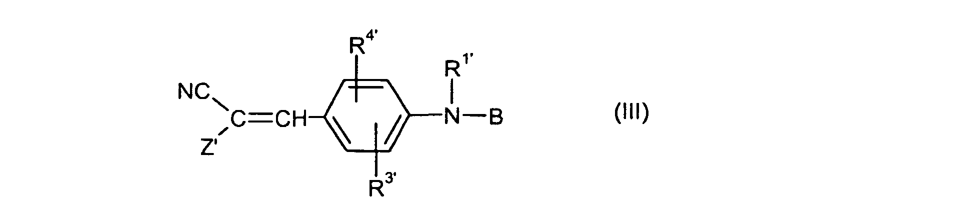
worin R^{1'}, R^{3'}, R^{4'} und Z' dieselbe Bedeutung wie die oben bzw. unten angegebenen Reste R¹, R³, R⁴ und Z haben, und
B für gegebenenfalls substituiertes C₂-C₆-Alkylen steht, das gegebenenfalls von einem oder mehreren Heteroatomen der Gruppe O, CO unterbrochen sein kann, oder für einen der Reste der Formeln,

-(C₂-C₄-Alkylen)-O-(C₂-C₆-Alkylen)-O-(C₂-C₄-Alkylen)-,

-(C₂-C₄-Alkylen)-O-(C₆-C₁₀-Arylen)-O-(C₂-C₄-Alkylen)-,

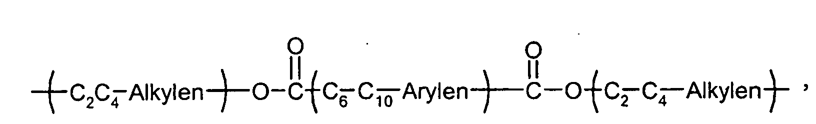

oder 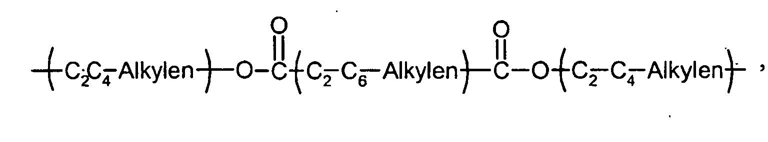 steht wobei die Alkylen- und Arylengruppen substituiert sein können.
oder
- R¹ und R²: gemeinsam einen C₄-C₆ Alkylenrest bilden,
- R⁵: steht für C₁-C₁₂-Alkyl oder C₆-C₁₀ Aryl insbesondere Phenyl und Naphthyl, wobei das Aryl z.B. durch Halogen wie Br, Cl, F, Alkyl, Carbonyl, Carbonsäureester substituiert sein kann,
- R⁶ und R⁷: stehen unabhängig voneinander für gegebenenfalls substituiertes Aryl oder Alkyl,
- R³ und R⁴: xstehen unabhängig voneinander für Wasserstoff, C₁-C₆-Alkyl, Trifluormethyl, C₁-C₄-Alkoxy, Phenoxy und Halogen wie F, Cl, Br,
- Z: steht für -CN, -SO₂X , 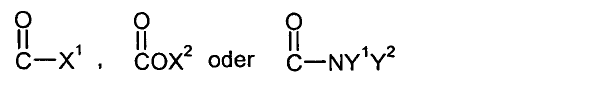 wobei X, X¹, X², Y¹ und Y² unabhängig voneinander für C₁-C₆-Alkyl, C₅-C₇-Cycloalkyl, C₁ bis C₃-Alkylphenyl oder für gegebenenfalls substituiertes Phenyl oder Naphthyl stehen,
wobei
Y¹ und Y² zusätzlich zusammen mit dem Stickstoffatom an das sie gebunden sind einen 5-7-gliedrigen gesättigten Heterocyclus bilden können,
dadurch gekennzeichnet, dass man eine Mischung aus einem Orthoameisensäuretrialkylester der Formel (V) und einer methylenaktiven Verbindung der Formel (VI)

CH(OR)₃ (V)

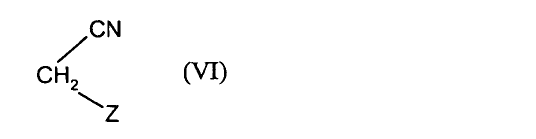

oder einer vorzugsweise aus (V) und (VI) hergestellten Acrylverbindung der Formel VII 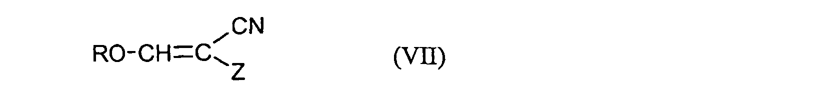 mit einem Amin der Formel 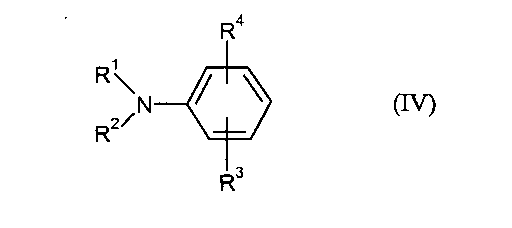 wobei R¹, R², R³ und R⁴ die oben angegebenen Bedeutungen besitzen,
umsetzt.

Im Voranstehenden genannte C₁-C₁₂ Alkylreste können beispielsweise durch OH, CN, Halogen, oder C₁-C₆-Alkoxy substituiert sein.

Im Rahmen dieser Anmeldung wird unter Alkyl vorzugsweise C₁-C₁₂-Alkyl, insbesondere Methyl, Ethyl, n-Propyl, n-Butyl, n-Pentyl, n-Hexyl, n-Dodecyl, n-Octyl und n-Nonyl, aber auch die entsprechenden verzweigten Alkyle verstanden.

Im Voranstehenden genannte Arylreste können beispielsweise durch Halogen, insbesondere F, Cl oder Br, C₁-C₁₂-Alkyl, C₄-C₇ Cycloalkyl, insbesondere Cyclopentyl, Cyclohexyl, C₁-C₄-Alkoxy oder Benzyl substituiert sein.

Bevorzugte Styrylverbindungen sind die der Formel (II) 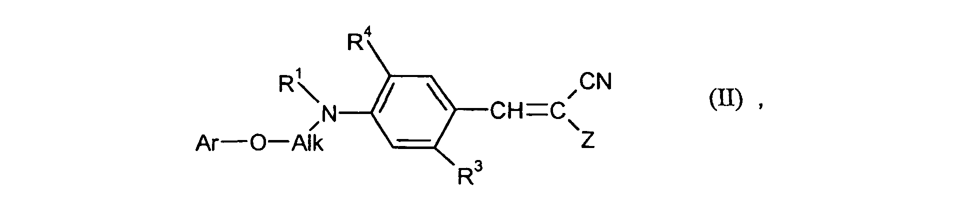 worin
- R¹, R³, R⁴ und Z: die oben angegebenen Bedeutungen besitzen,
- Alk: eine C₂-C₄-Alkylengruppe bedeutet,
- Ar: xPhenyl, Naphthyl oder einen Phenyl oder Naphthylrest bezeichnet, der wenigstens einen C₁-C₁₆-Alkyl wie Propyl, Isopropyl, Butyl, Isobutyl, tert.-Butyl, Isooctyl, Isononyl, Lauryl, C₅-C₇-Cycloalkyl wie Cyclopentyl, Cyclohexyl, C₁-C₁₂-Alkylmercapto, C₅-C₇-Cycloalkylmercapto, Phenyl-C₁-C₃-alkylmercapto, Phenylmercapto oder Hetarylmercapto-Substituenten enthält,
und
gegebenenfalls durch weitere Substituenten wie beispielsweise C₁-C₆-Alkyl, C₅-C₇-Cycloalkyl, C₁ bis C₃-Alkylphenyl oder Halogenreste wie F, Cl, Br substituiert ist.

Bevorzugt sind auch Styrylverbindungen der Formel (VIII) 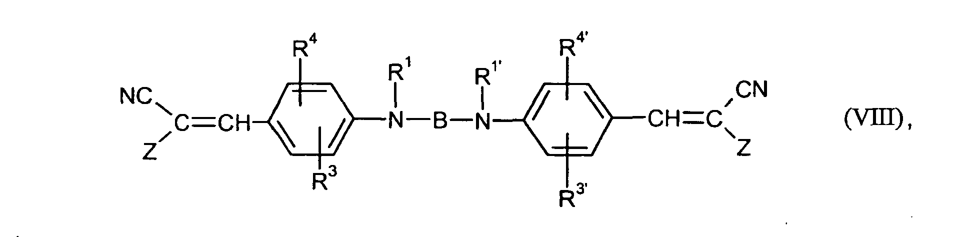 wobei B für gegebenenfalls substituiertes C₂-C₆-Alkylen steht, das gegebenenfalls von einem oder mehreren Heteroatomen der Gruppe O, CO unterbrochen sein kann, oder für einen der Reste der Formeln,

-(C₂-C₄-Alkylen)-O-(C₂-C₆-Alkylen)-O-(C₂-C₄-Alkylen)-,

-(C₂-C₄-Alkylen)-O-(C₆-C₁₀-Arylen)-O-(C₂-C₄-Alkylen)-,

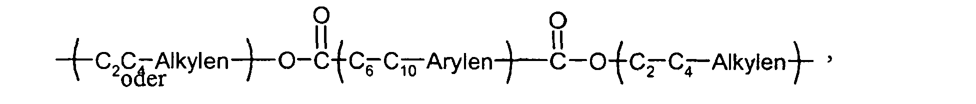

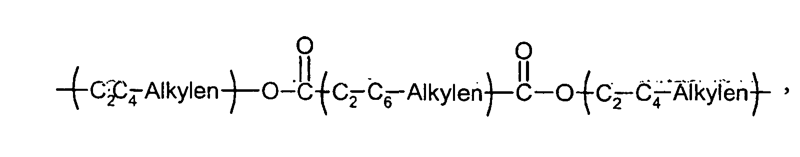

steht
wobei die Alkylen- und Arylengruppen substituiert sein können.

Besonders bevorzugte Styrylverbindungen sind solche der Formel (II), worin
- Ar: x einen Phenyl oder Naphthylrest bezeichnet, der wenigstens einen C₁-C₁₆-Alkyl wie Propyl, Isopropyl, Butyl, Isobutyl, tert.-Butyl, Isooctyl, Isononyl, Lauryl, C₅-C₇-Cycloalkyl wie Cyclopentyl, Cyclohexyl, C₁-C₁₂-Alkylmercapto, C₅-C₇-Cycloalkylmercapto, Phenyl-C₁-C₃-alkylmercapto, Phenylmercapto oder Hetarylmercapto-Substituenten enthält.

Bevorzugte Verbindungen der Formel (I) sind solche der Formel (IIa) 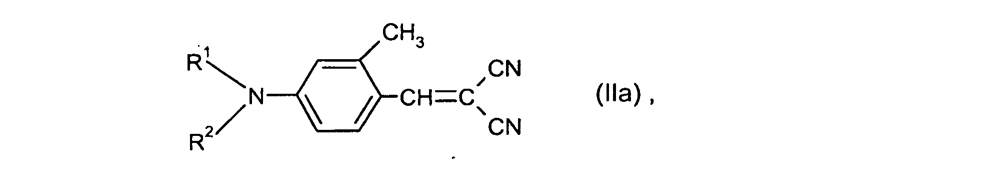 wobei R¹ und R² die oben angegebenen Bedeutungen besitzen.

In einer bevorzugten Ausführung des erfindungsgemäßen Verfahrens werden die Acrylverbindung der Formel (VII) 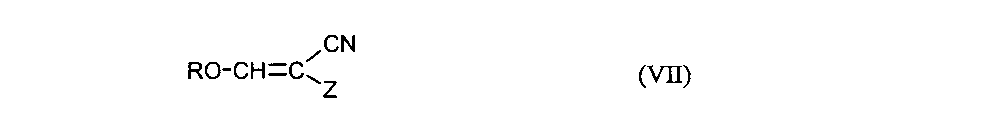 durch Umsetzen der Verbindungen der Formeln

CH(OR)₃ (V)

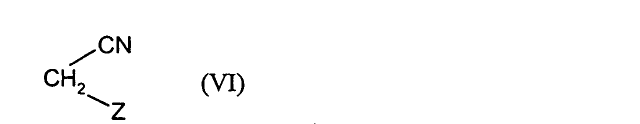

gebildet. Die Verbindungen der Formeln (V) und (VI) können direkt im Gemisch mit dem Amin (IV) eingesetzt werden, oder in einem vorangehenden Schritt separat vorkondensiert und ggf. zwischenisoliert werden, wobei sich die Acrylverbindung der Formel (VII) bildet, die in einem zweiten Schritt mit dem Amin umgesetzt wird.

In einer bevorzugten Ausführungsform des erfindungsgemäßen Verfahrens beträgt das molare Verhältnis von Verbindungen IV:VII 1:1,0 bis 1:1,4, 1:1,0 bis 1:1,2, insbesondere 1:1,0 bis 1:1,1.

Bevorzugte Verbindungen der Formel (V) sind Orthoameisensäuretrimethylester und Orthoameisensäuretriethylester.

Das erfindungsgemäße Verfahren wird vorzugsweise in einem organischen Lösungsmittel oder in überschüssigem Orthoameisensäureester durchgeführt, wobei unter Lösungsmittel Verbindungen verstanden werden, die unter den Reaktionsbedingungen keine Reaktion mit den Reaktionsteilnehmern oder Produkten eingehen.

Als bevorzugte Lösungsmittel werden Dioxan, chlorierte Kohlenwasserstoffe, Benzol, Chlorbenzol, Dichlorbenzol, Toluol, Xylol, N-Methylpyrrolidon (NMP), Dimethylformamid (DMF), Dimethylsulfoxid und Alkohole wie Methanol, Ethanol, Propanole, Butanole, Pentanole, Hexanole, Heptanole, Oktanole, Glykole wie Ethylenglykol, Diethylenglykol und die entsprechenden Mono- und Dialkylether der Glykole, ganz besonders bevorzugt wird n-Butanol, n-Oktanol, DMF und NMP bzw. Gemische dieser Lösungsmittel eingesetzt.

Bevorzugt erfolgt das erfindungsgemäße Verfahren bei einer Temperatur von 70 bis 180°C, insbesondere bei 90 bis 140°C. Dabei wird beispielsweise unter Rückfluss gearbeitet, wobei man gegebenenfalls den entstehenden Alkohol ganz oder teilweise abdestilliert. Es kann auch im geschlossenen System oberhalb des Siedepunktes des verwendeten Lösungsmittel bzw. wenigstens einer Reaktionskomponente, bzw. dem freiwerdenden Alkohol HOR unter Druck gearbeitet werden.

In einer bevorzugten Ausführungsform des erfindungsgemäßen Verfahrens wird die Reaktionsmischung bis zur Trockene eingedampft und der trockene Rückstand dann aus einem geeigneten Lösungsmittel umkristallisiert. Besonders bevorzugt wird die Reaktionsmischung nach dem Erkalten abfiltriert, der Filterkuchen mit Alkohol und Wasser gewaschen und anschließend getrocknet.

Unter Kondensationsreaktion wird im Rahmen dieser Erfindung daher eine Reaktion verstanden bei der Alkohol freigesetzt wird.

Die erfindungsgemäße Kondensation gelingt durchweg bereits ohne weitere Zusätze. Als Katalysatoren können Zinkverbindungen wie Zinkstaub oder Zinkhalogenide, z.B. ZnCl, ZnBr₂ oder ZnJ₂ oder Kupferverbindungen wie z.B. CuCl zugesetzt werden.

In einer bevorzugten Ausführungsform wird von 1,0 bis 1,2 mol Äquivalent der Verbindung V in Butanol mit 1,0 mol Äquivalent des Amins IV gemischt und nach Zusatz von 1,1 bis 1,3 mol Äquivalent Orthoameisensäuretrimethylester gegebenenfalls in Gegenwart eines Katalysators so lange zum Rückfluss, gegebenenfalls unter Abdestillieren des entstehenden Alkohols, wie z.B. Methanol oder Ethanol, erhitzt, bis die eingesetzten Komponenten umgesetzt sind. Dann wird abgekühlt, abfiltriert, mit Methanol und Wasser gewaschen und getrocknet.

Ganz besonders bevorzugt wird das Amin IV in Butanol bei 120°C, vorzugsweise bei 110°C vorgelegt, dann eine Lösung von Malodinitril (VI) und Orthoameisensäuretrimethylester (V) in Butanol langsam zugetropft und dann solange bei 120°C, vorzugsweise bei 110°C gehalten, bis die Komponenten umgesetzt sind.

Es wurde ferner ein Verfahren zur Herstellung von Styrylverbindungen der Formel (I) gefunden, dadurch gekennzeichnet, dass man Verbindungen der Formeln (IV), (V) und (VI)

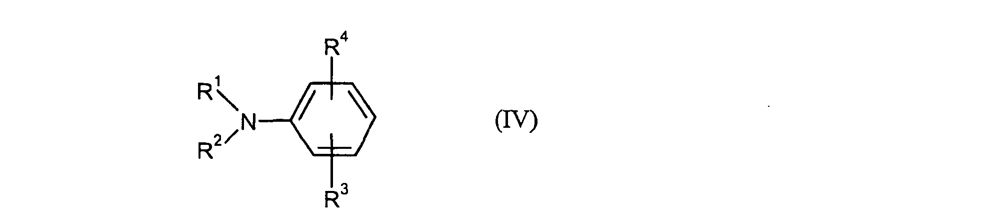

CH(OR)₃ (V)

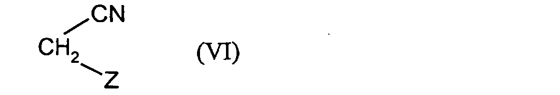

worin
- R: für C₁-C₆-Alkyl, insbesondere für Methyl oder Ethyl steht, und
- R¹, R², R³, R⁴ und Z: die oben angegebenen Bedeutungen besitzen,
miteinander umsetzt. Für diese Umsetzung gelten die oben beschriebenen Verfahrensweisen.

In einer bevorzugten Ausführungsform des erfindungsgemäßen Verfahrens beträgt das molare Verhältnis von Verbindungen IV:V:VI 1:1:1 bis 1:2,0:1,4, insbesondere 1:1:1 bis 1:1,3:1,2.

In einer bevorzugten Ausführungsform des erfindungsgemäßen Verfahrens zur Herstellung der Verbindung VII beträgt das molare Verhältnis von Verbindungen V:VI von 1:1 bis 2,0:1,4, insbesondere 1:1 bis 1,2:1,1.

Die erfindungsgemäß erhaltenen Farbstoffe eignen sich hervorragend zum Färben und Bedrucken hydrophober Fasermaterialien, insbesondere von Polyestern, beispielsweise solchen aus Terephthalsäure und Ethylglykol oder 1,4-Bis(hydroxymethyl)-cyclohexan, von Polycarbonaten, z.B. solchen aus α,α-Dimethyl-4,4'-dihydroxy-diphenylmethan und Phosgen, und Estern der Cellulose, beispielsweise Cellulose triacetat, und von Fasern auf Polyvinylchlorid-Basis.

Die Farbstoffe können nach den bekannten Färbeverfahren angewandt werden, beispielsweise im Ausziehverfahren als wässrige Dispersionen in Gegenwart von üblichen Dispergiermitteln und gegebenenfalls üblichen Quellmitteln (Carrier) bei Temperaturen nahe 100°C oder ohne Carrier bei 120 bis 140°C (HT-Verfahren). Vorzüglich eignen sie sich ferner zum Färben nach dem bekannten ThermosolVerfahren. Sie färben gleichzeitig im Färbebad anwesende Wolle und Baumwolle nicht oder nur wenig an, so dass sie gut zum Färben von Polyester/Wolle- und Polyester/Cellulosefaser-Mischgeweben verwendbar sind. Sie besitzen vorzügliche Löslichkeit in vielen organischen Lösungsmitteln und können zum Färben von Lacken, Ölen, Kunststoffen, wie Polystyrol und Polyethylen, in der Masse und von Fasern nach den üblichen Spinnfärbeprozessen dienen.

Die erfindungsgemäß erhaltenen Farbstoffe verleihen den genannten hydrophoben Materialien klare, gelbe Färbungen von sehr guter Lichtechtheit und guter Wasch- und Sublimierechtheit. Sie können mit blauen Azo- und Anthrachinon-Dispersionsfarbstoffen kombiniert gefärbt werden und ergeben dabei auf Cellulosetriacetat und auf Polyester Grünfärbungen von sehr guten Lichtechtheiten, die kein "catalytic fading" zeigen. Besonders hervorzuheben ist die gute Färbebad- und Verkochungsbeständigkeit der erfindungsgemäß erhaltenen Farbstoffe in neutralen bis mäßig basischen Flotten bzw. Druckpasten (pH-Stabilität bis etwa pH 10), so dass sie sich auch gut für das einbadige Färben (Thermosol-Thermofixier-Verfahren) und Bedrucken von Polyester/Baumwolle-Mischgeweben in Kombination mit Reaktivfarbstoffen eignen, welche die Gegenwart von Alkali (Natriumcarbonat, Natriumhydrogencarbonat) erfordern.

Unter Färben in der Masse werden insbesondere Verfahren verstanden, bei denen der Farbstoff in die geschmolzene Kunststoffmasse eingearbeitet wird, z.B. unter Zuhilfenahme eines Extruders, oder bei dem der Farbstoff bereits Ausgangskomponenten zur Herstellung des Kunststoffes, z.B. Monomeren vor der Polymerisation, zugesetzt wird.

Besonders bevorzugte Kunststoffe sind Thermoplaste, beispielsweise Vinylpolymere, Polyester, Polyamide sowie Polyolefine, insbesondere Polyethylen und Polypropylen oder Polycarbonate.

Geeignete Vinylpolymere sind Polystyrol, Styrol-Acrylnitril-Copolymere, Styrol-Butadien-Copolymere, Styrol-Butadien-Acrylnitril-Terpolymere, Polymethacrylat, Polyvinylchlorid u.a.

Weiterhin geeignet sind Polyester wie beispielsweise Polyethylenterephthalate, Polycarbonate und Celluloseester.

Bevorzugt sind Polystyrol, Styrol-Mischpolymere, Polycarbonate, Polymethacrylate und Polyamide. Besonders bevorzugt ist Polystyrol, Polyethylen und Polypropylen.

Die erwähnten hochmolekularen Verbindungen können einzeln oder in Gemischen, als plastische Massen oder Schmelzen vorliegen.

Die erfindungsgemäßen Farbstoffe werden vorzugsweise in feinverteilter Form zur Anwendung gebracht, wobei Dispergiermittel mitverwendet werden können aber nicht müssen.

Wird die Farbstoffmischung nach der Polymerisation eingesetzt, so wird sie vorzugsweise mit dem Kunststoffgranulat trocken vermischt oder vermahlen und dieses Gemisch z.B. auf Mischwalzen oder in Schnecken plastifiziert und homogenisiert. Man kann die Farbstoffe aber auch der schmelzflüssigen Masse zugeben und diese durch Rühren homogen verteilen. Das derart vorgefärbte Material wird dann wie üblich z.B. durch Verspinnen zu Borsten, Fäden usw. oder durch Extrusion oder im Spritzguss-Verfahren zu Formteilen weiterverarbeitet.

Da die Farbstoffe gegenüber Polymerisationskatalysatoren, insbesondere Peroxiden, beständig sind, ist es auch möglich, den Farbstoff den monomeren Ausgangsmaterialien für die Kunststoffe zuzusetzen und dann in Gegenwart von Polymerisationskatalysatoren zu polymerisieren. Dazu wird der Farbstoff vorzugsweise in den monomeren Komponenten gelöst oder mit ihnen innig vermischt.

Die erfindungsgemäße Farbstoffe werden vorzugsweise zum Färben der genannten Polymeren in Mengen von 0,0001 bis 1 Gew.-%, insbesondere 0,01 bis 0,5 Gew.-%, bezogen auf die Polymermenge, eingesetzt.

Durch Zusatz von in den Polymeren unlöslichen Pigmenten, wie z.B. Titandioxid, können entsprechende wertvolle gedeckte Färbungen erhalten werden.

Titandioxid kann in einer Menge von 0,01 bis 10 Gew.-%, vorzugsweise 0,1 bis 5 Gew.-%, bezogen auf die Polymermenge, verwendet werden.

Nach dem erfindungsgemäßen Verfahren erhält man transparente bzw. gedeckte brillante orange Färbungen mit guter Hitzebeständigkeit sowie guter Licht-, Wetter- und Sublimierechtheit.

In das erfindungsgemäße Verfahren können auch Mischungen der erfindungsgemäßen Farbstoffmischung der Formel (I) mit anderen Farbstoffen und/oder anorganischen bzw. organischen Pigmenten eingesetzt werden.

Die Erfindung wird erläutert, jedoch nicht beschränkt durch die folgenden Beispiele, in denen die Teile gewichtsmäßig angegeben sind, Prozentangaben Gewichtsprozente (Gew.-%) bedeuten.

### Beispiel 1

In 400 ml Butanol werden 30,0 g Malodinitril, 57 g Orthoameisensäuretrimethylester und 152 g des Amins der Formel (1) 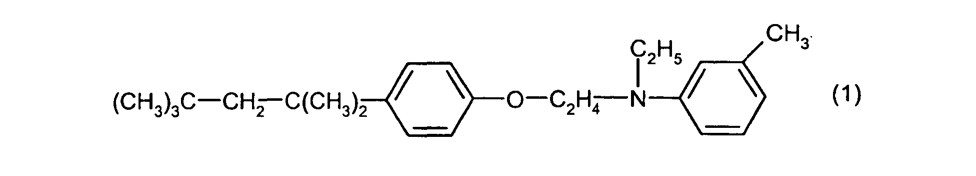 innerhalb von 2 Stunden unter Abdestillieren von Methanol auf 110°C erhitzt und 16 Stunden bei 110 bis 115°C gehalten. Nach Abkühlen auf 25°C wird abgesaugt, nacheinander mit 100 ml Butanol, 400 ml Methanol und 800 ml heißem Wasser gewaschen

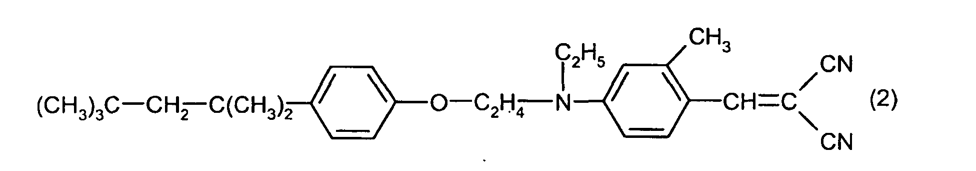

Nach Trocknen des Nutschkuchens erhält man 148,6 g Farbstoff der Formel (2). Er färbt Polystyrol in der Masse in einem klaren, grünstichigen Gelb.

Analog Beispiel 1 werden die folgenden Farbstoffe durch Umsetzung mit dem aufgelisteten Aminen gebildet:

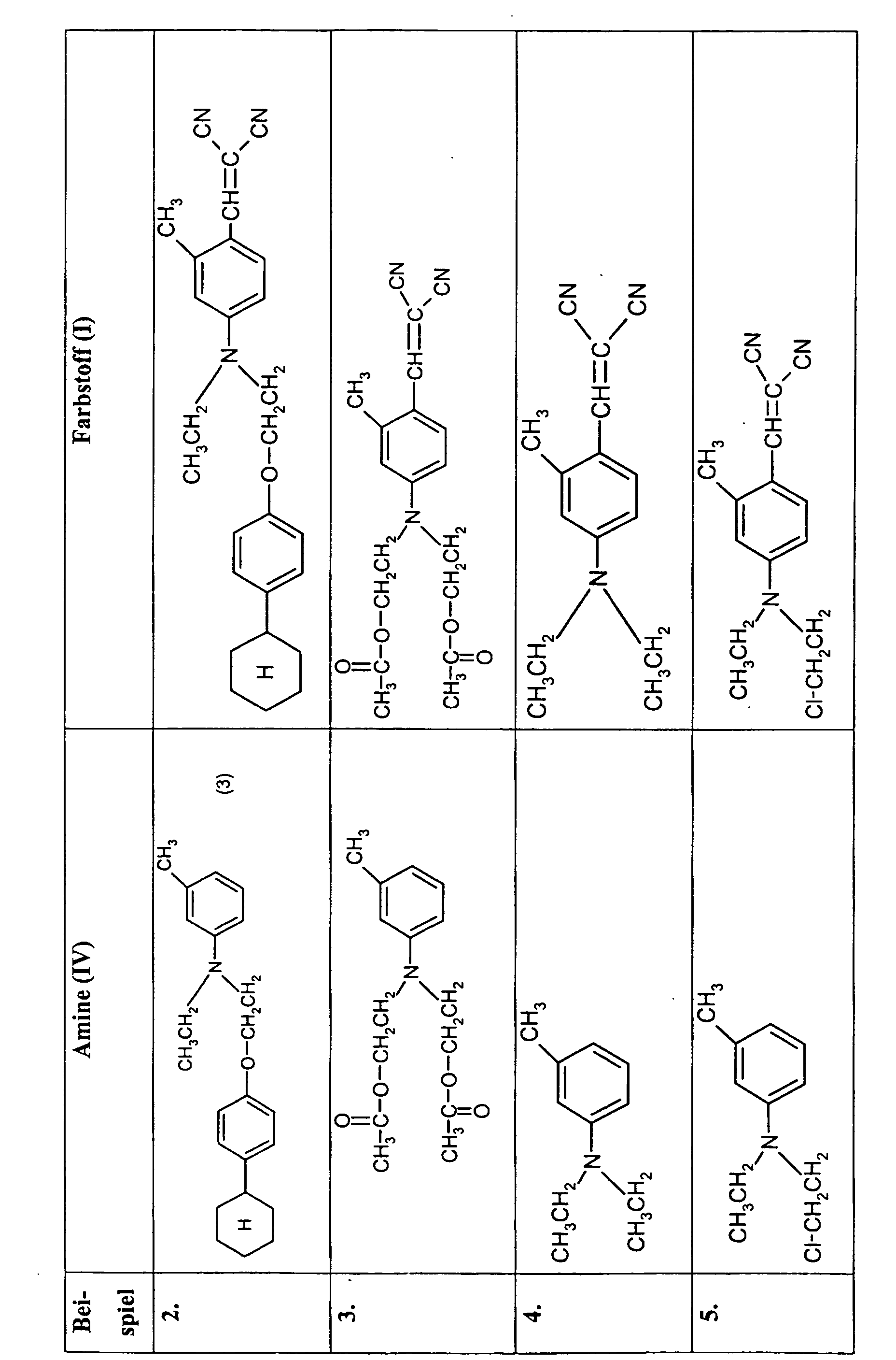

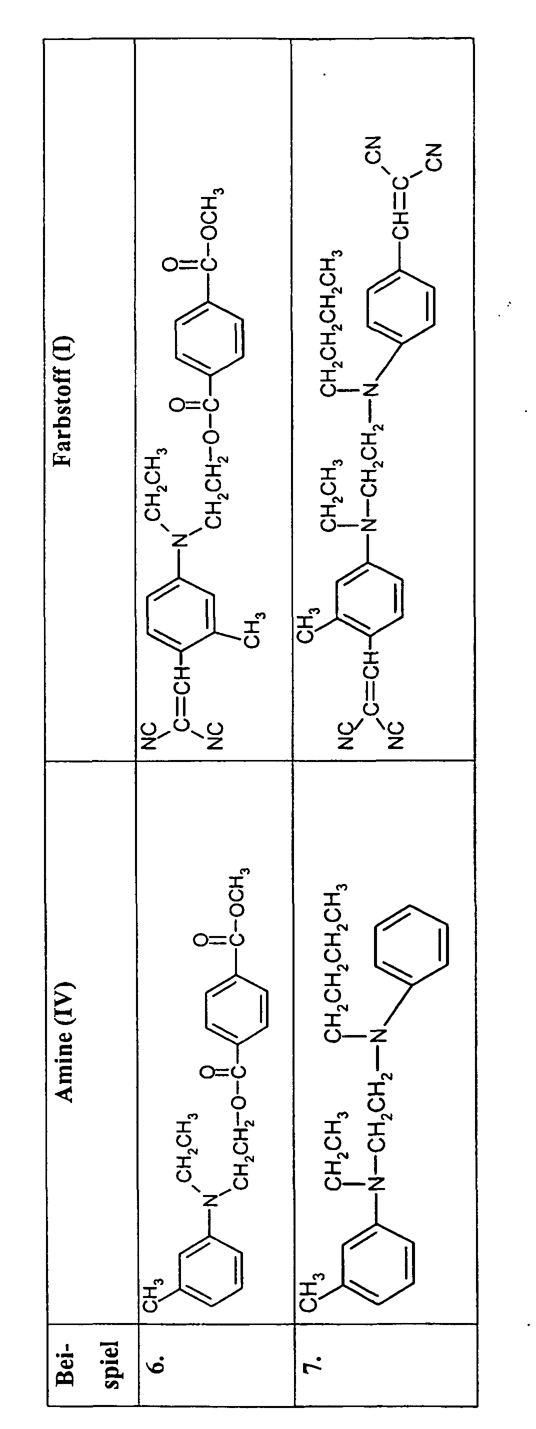

### Beispiel 8

Eine Mischung aus 34 g Malodinitril, 110 g Orthoameisensäurediethylester und 120 g Acetanhydrid wird 4 Stunden auf 100°C erhitzt. Dann erhöht man die Temperatur auf 140°C und lässt die niedrig siedenden Bestandteile abdestillieren. Nach 2 Stunden bei 140°C wird die Reaktionsmischung in Vakuum (ca. 20 mbar) destilliert. Als einheitliche Fraktion (Sdp. 155 bis 160°C) werden 58,4 g Ethoxymethylenmalodinitril der Formel

CH₃CH₂OCH=C(CN)₂

isoliert.

In 150 ml Butanol werden 36,7 g Anilinderivats der Formel 1 aus Beispiel 1 und 15,3 g Ethoxymethylenmalodinitril von oben gelöst und zum Rückfluss (115-120°C) erhitzt. Nach 38 Stunden Rückfluss lässt man auf Raumtemperatur abkühlen, saugt ab und wäscht den Nutschkuchen mit 200 ml Methanol und 500 ml warmen Wasser. Man isoliert 31,4 g eines gelben Styrylfarbstoffs, der identisch mit dem des Beispiel 1 ist.

## Patentansprüche

1. Verfahren zur Herstellung von Verbindungen der Formel (I) 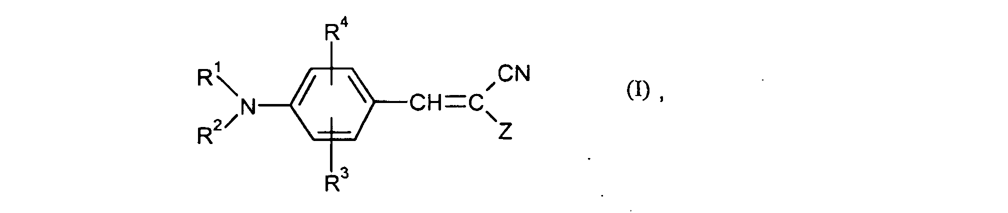 worin
R¹ und R² unabhängig voneinander für C₁-C₁₂-Alkyl stehen, die durch Halogen wie F, Cl, Br, Hydroxy, Cyano, -OR⁵, SR⁵, 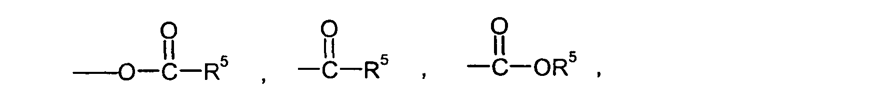 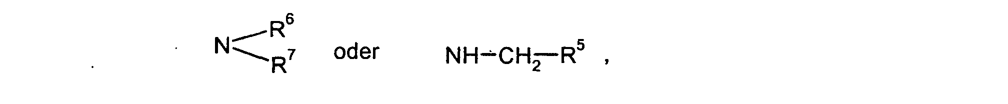
substituiert sein können, oder für gegebenenfalls substituierte Alkoxylate, vorzugsweise solche der Formel 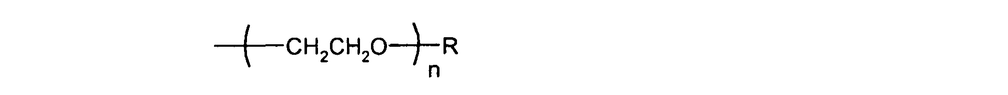 worin
R für H oder gegebenenfalls substituiertes Phenyl, insbesondere durch Halogen vorzugsweise Cl oder F, C₁-C₈-Alkyl und/oder C₁-C₈-Alkoxy substituiertes Phenyl, und
n für eine Zahl von 1 bis 50, insbesondere 1 bis 20 stehen,
insbesondere solche der Ethylenoxide mit einem durchschnittlichen Alkoxylierungsgrad von 1-50, vorzugsweise von 1-20 stehen, oder
R¹ für den Rest der Formel (III) steht, 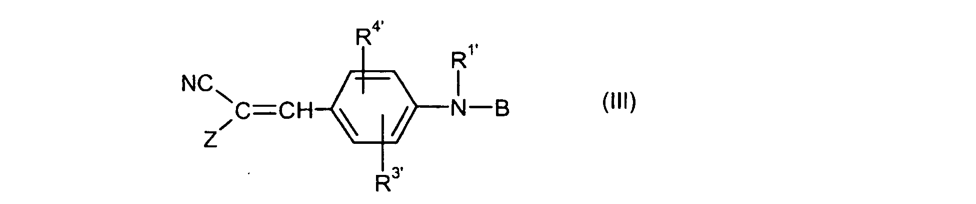
worin R^{1'}, R^{3'}, R^{4'} und Z' dieselbe Bedeutung wie die entsprechenden oben bzw. unten angegebenen Reste R¹, R³, R⁴ und Z haben, und
B für gegebenenfalls substituiertes C₂-C₆-Alkylen steht, das gegebenenfalls von einem oder mehreren Heteroatomen der Gruppe O, CO unterbrochen sein kann, oder für einen der Reste der Formeln,
-(C₂-C₄-Alkylen)-O-(C₂-C₆-Alkylen)-O-(C₂-C₄-Alkylen)-,
-(C₂-C₄-Alkylen)-O-(C₆-C₁₀-Arylen)-O-(C₂-C₄-Alkylen)-, 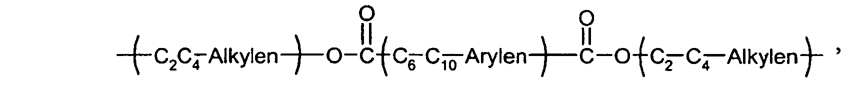
oder 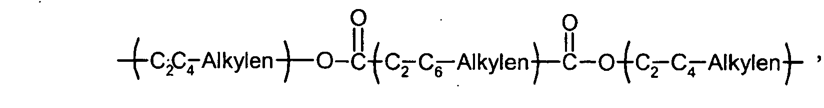 steht
wobei die Alkylen- und Arylengruppen substituiert sein können.
oder
R¹ und R² gemeinsam einen C₄-C₆ Alkylenrest bilden,
R⁵ steht für C₁-C₁₂-Alkyl oder C₆-C₁₀ Aryl insbesondere Phenyl und Naphthyl, wobei das Aryl durch Halogen wie Br, Cl, F, Alkyl, Carbonyl, Carbonsäureester substituiert sein kann,
R⁶ und R⁷ stehen unabhängig voneinander für gegebenenfalls substituiertes Aryl oder Alkyl,
R³ und R⁴ stehen unabhängig voneinander für Wasserstoff, C₁-C₆-Alkyl, Trifluormethyl, C₁-C₄-Alkoxy, Phenoxy und Halogen wie F, Cl, Br,
Z steht für -CN, -SO₂X , 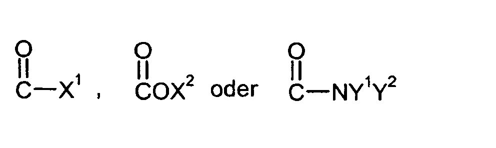
wobei X, X¹, X², Y¹ und Y² unabhängig voneinander für C₁-C₆-Alkyl, C₅-C₇-Cycloalkyl, C₁ bis C₃-Alkylphenyl oder gegegebenenfalls substituiertes Phenyl oder Naphthyl stehen,
wobei
Y¹ und Y² zusätzlich zusammen mit dem Stickstoffatom an das sie gebunden sind einen 5-7-gliedrigen gesättigten Heterocyclus bilden können,
**dadurch gekennzeichnet, dass** man eine Mischung aus einem Orthoameisensäuretrialkylester der Formel (V) und einer methylenaktiven Verbindung der Formel (VI)
CH(OR)₃ (V) 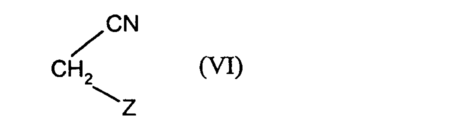
oder eine Acrylverbindung der Formel VII 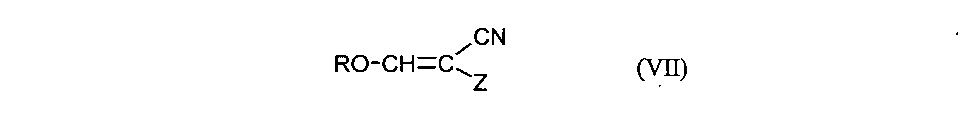 mit einem Amin der Formel 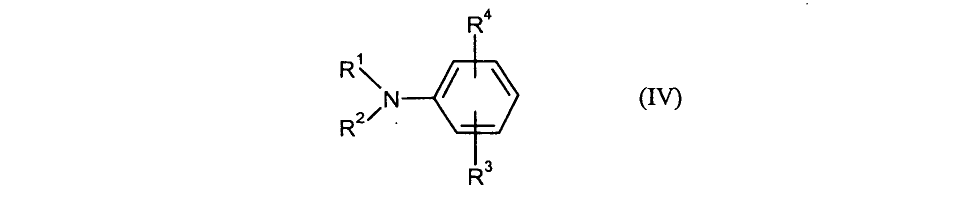 wobei R¹, R², R³ und R⁴ die oben angegebenem Bedeutungen besitzen,
umsetzt.

2. Verfahren gemäß Anspruch 1, wobei das molare Verhältnis von Verbindungen IV:VII 1:1,0 bis 1:1,4, insbesondere 1:1,0 bis 1:1,1 beträgt.

3. Verfahren gemäß Anspruch 1, **dadurch gekennzeichnet, dass** die Verbindung der Formel VII **dadurch** erhalten wird, dass man Verbindungen der Formel (V) und (VI)
CH(OR)₃ (V), 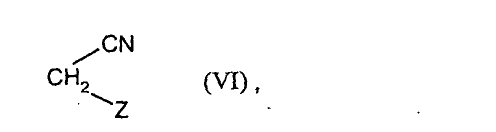
umsetzt.

4. Verfahren zur Herstellung von Verbindungen gemäß Anspruch 1, **dadurch gekennzeichnet, dass** man Verbindungen der Formeln (IV), (V) und (VI) 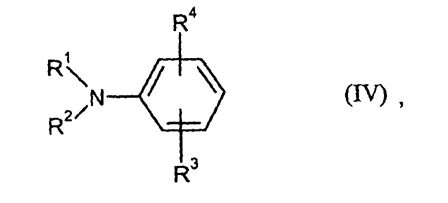
CH(OR)₃ (V), 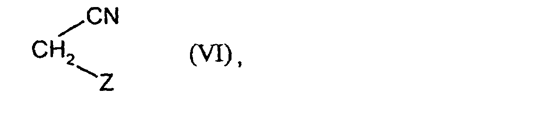
worin
R für C₁-C₆-Alkyl, insbesondere für Methyl oder Ethyl steht, und
R¹,R²,R³, R⁴ und Z die in Anspruch 1 angegebene Bedeutung besitzen,
miteinander umsetzt.

5. Verfahren gemäß Ansprüche 1 und 4, wobei das molare Verhältnis von Verbindungen IV:V:VI 1:1:1 bis 1:2,0:1,4, insbesondere 1:1:1 bis 1:1,3:1,2 beträgt.

6. Verfahren gemäß wenigstens einem der Ansprüche 1 bis 5, **dadurch gekennzeichnet, dass** das Verfahren in einem organischen Lösungsmittel oder in Orthoameisensäureester durchgeführt wird.

7. Verfahren gemäß wenigstens einem der Ansprüche 1 bis 5, **dadurch gekennzeichnet, dass** das Verfahren bei einer Temperatur von 70 bis 180°C, insbesondere bei 90 bis 140°C erfolgt.

8. Verfahren gemäß wenigstens einem der Ansprüche 1 bis 5, **dadurch gekennzeichnet, dass** das Verfahren im Gegenwart eines Katalysators erfolgt.

9. Verfahren gemäß wenigstens einem der Ansprüche 1 bis 8, **dadurch gekennzeichnet, dass** das Verfahren in einem organischen Lösungsmittel, bei einer Temperatur von 70 bis 180°C, und in Gegenwart eines Katalysators erfolgt.

## Claims

1. Process for preparing compounds of the formula (I) 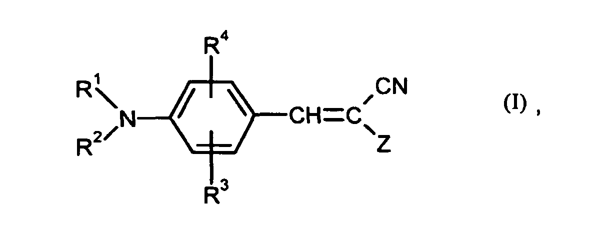 in which
R¹ and R² independently of one another stand for C₁-C₁₂ alkyl, which may be substituted by halogen such as F, Cl, Br, by hydroxyl, cyano, -OR⁵, SR⁵, 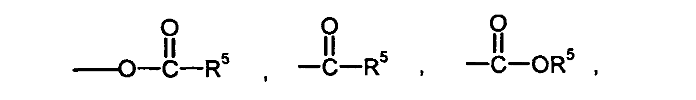 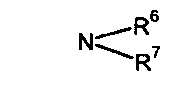 or NH-CH₂-R⁵, or for optionally substituted alkoxylates, preferably those of the formula 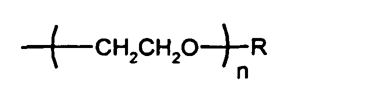
in which
R stands for H or optionally substituted phenyl, in particular phenyl substituted by halogen, preferably Cl or F, by C₁-C₈ alkyl and/or by C₁-C₈ alkoxy, and
n stands for a number from 1 to 50, in particular from 1 to 20,
especially those of ethylene oxides having an average degree of alkoxylation of 1-50, preferably 1-20, or
R¹ stands for the radical of the formula (III) 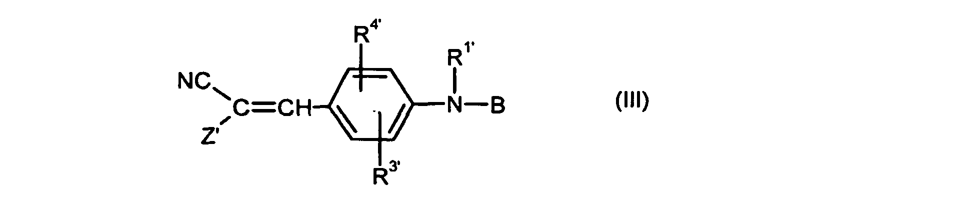 in which R^{1'}, R^{3'}, R^{4'} and Z' are as defined for the corresponding radicals R¹, R³, R⁴ and Z above or below, and B stands for optionally substituted C₂-C₆ alkylene which may optionally be interrupted by one or more heteroatoms from the group consisting of O and CO or for one of the radicals of the formulae
-(C₂-C₄-alkylene)-O-(C₂-C₆-alkylene)-O-(C₂-C₄-alkylene)-,
-(C₂-C₄-alkylene)-O-(C₆-C₁₀-arylene)-O-(C₂-C₄-alkylene)-, 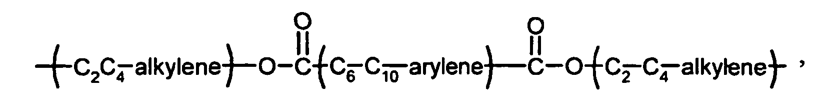
or 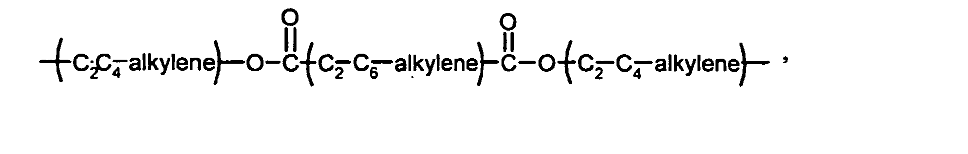
in which the alkylene and arylene groups may be substituted.
or
R¹ and R² together form a C₄-C₆ alkylene radical,
R⁵ stands for C₁-C₁₂ alkyl or C₆-C₁₀ aryl, especially phenyl and naphthyl, it being possible for the aryl to be substituted by halogen such as Br, Cl, F, or by alkyl, carbonyl or carboxylic esters,
R⁶ and R⁷ stand independently of one another for optionally substituted aryl or alkyl,
R³ and R⁴ stand independently of one another for hydrogen, C₁-C₆ alkyl, trifluoromethyl, C₁-C₄ alkoxy, phenoxy and halogen such as F, Cl, Br,
Z stands for -CN , -SO₂X , 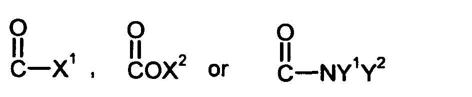 in which X, X¹, X², Y¹ and Y² independently of one another stand for C₁-C₆ alkyl, C₅-C₇ cycloalkyl, C₁ to C₃ alkylphenyl or for optionally substituted phenyl or naphthyl,
it being additionally possible for
Y¹ and Y² together with the nitrogen atom to which they are attached to form a 5-7-membered saturated heterocycle,
**characterized in that** a mixture of a trialkyl orthoformate of the formula (V) and a methylene-active compound of the formula (VI)
CH(OR)₃ (V) 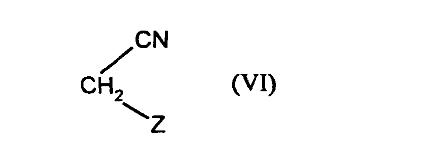
or of an acrylic compound of the formula VII 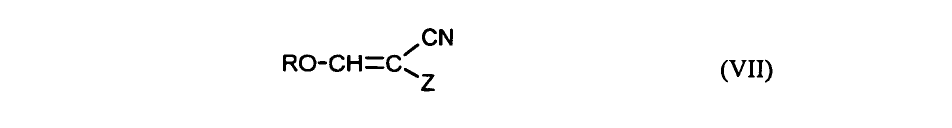 is reacted with an amine of the formula 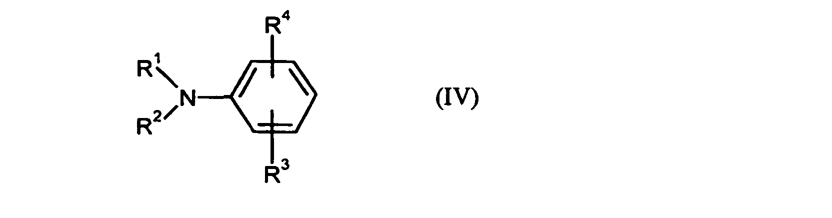 where R¹, R², R³ and R⁴ are as defined above.

2. Process according to Claim 1, wherein the molar ratio of compounds IV to VII is from 1:1.0 to 1:1.4, in particular from 1:1.0 to 1:1.1.

3. Process according to Claim 1, **characterized in that** the compound of the formula VII is obtained by reacting compounds of the formula (V) and (VI)
CH(OR)₃ (V),

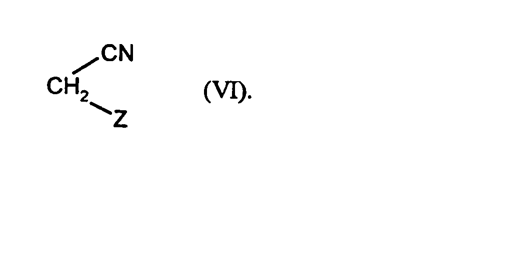

4. Process for preparing compounds according to Claim 1, **characterized in that** compounds of the formulae (IV), (V) and (VI) 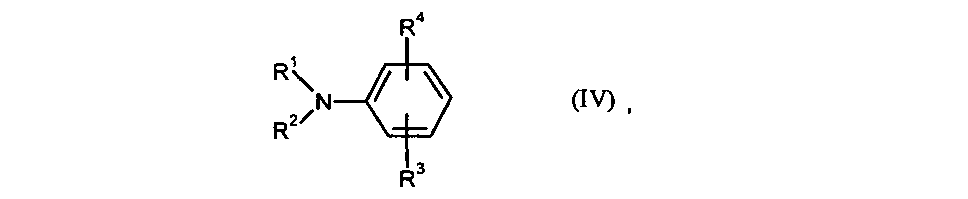
CH(OR)₃ (V), 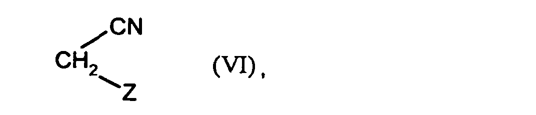
in which
R stands for C₁-C₆ alkyl, in particular for methyl or ethyl, and
R¹, R², R³, R⁴ and Z are as defined in Claim 1,
are reacted with one another.

5. Process according to Claims 1 and 4, wherein the molar ratio of compounds IV to V to VI is from 1:1:1 to 1:2.0:1.4, in particular from 1:1:1 to 1:1.3:1.2.

6. Process according to at least one of Claims 1 to 5, **characterized in that** the process is conducted in an organic solvent or in orthoformate.

7. Process according to at least one of Claims 1 to 5, **characterized in that** the process takes place at a temperature of from 70 to 180°C, in particular at from 90 to 140°C.

8. Process according to at least one of Claims 1 to 5, **characterized in that** the process takes place in the presence of a catalyst.

9. Process according to at least one of Claims 1 to 8, **characterized in that** the process takes place in an organic solvent, at a temperature of from 70 to 180°C, and in the presence of a catalyst.

## Revendications

1. Procédé pour préparer des composés de formule (I) 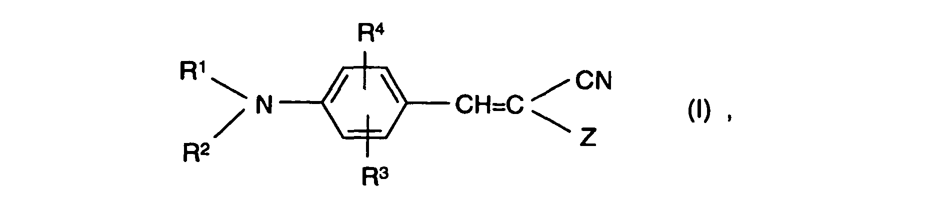 où
R¹ et R² représentent indépendamment l'un de l'autre C₁-C₁₂-alkyle, qui peuvent être substitués par halogène comme F, CI, Br, hydroxy, cyano, -OR⁵, SR⁵, 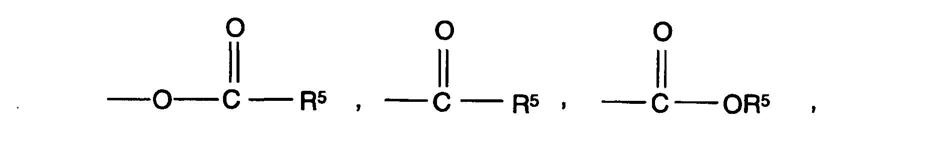 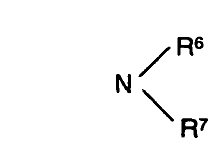 ou NH-CH₂-R⁵ ,
ou des alcoxylates éventuellement substitués, de préférence ceux de formule 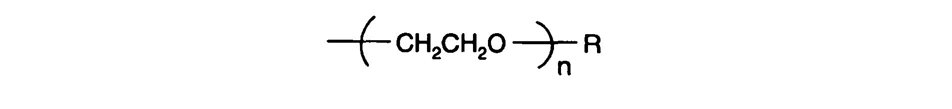 où
R représente H ou phényle éventuellement substitué, en particulier phényle substitué par halogène, de préférence Cl ou F, C₁-C₈-alkyle et/ou C₁-C₈-alcoxy, et
n représente un nombre de 1 à 50, en particulier de 1 à 20, en particulier ceux des oxydes d'éthylène ayant un degré d'alcoxylation moyen de 1-50, de préférence de 1-20, ou
R¹ représente le groupement de formule (III) 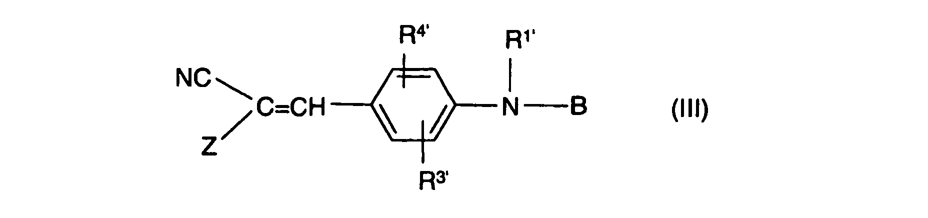
où R^{1'}, R^{3'}, R^{4'} et Z' ont la même signification que les groupements R¹, R³, R⁴ et Z correspondants indiqués ci-dessus ou ci-dessous, et
B représente C₂-C₆-alkylène éventuellement substitué, qui peut éventuellement être interrompu par un ou plusieurs hétéroatomes du groupe O, CO, ou représente l'un des groupements des formules
-(C₂-C₄-alkylène)-O-(C₂-C₆-alkylène)-O-(C₂-C₄-alkylène)-,
-(C₂-C₄-alkylène)-O-(C₆-C₁₀-arylène)-O-(C₂-C₄-alkylène)-, 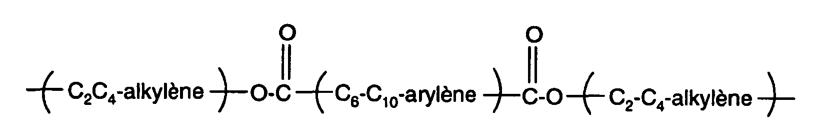
ou 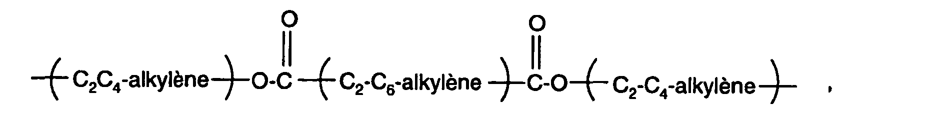 où les groupes alkylène et arylène peuvent être substitués,
ou
R¹ et R² forment ensemble un groupement C₄-C₆ alkylène,
R⁵ représente C₁-C₁₂-alkyle ou C₆-C₁₀ aryle, en particulier phényle et naphtyle, où l'aryle peut être substitué par halogène comme Br, Cl, F, alkyle, carbonyle, ester d'acide carboxylique,
R⁶ et R⁷ x représentent indépendamment l'un de l'autre aryle ou alkyle éventuellement substitué,
R³ et R⁴ représentent indépendamment l'un de l'autre l'hydrogène, C₁-C₆-alkyle, trifluorométhyle, C₁-C₄-alcoxy, phénoxy et halogène comme F, CI, Br,
Z représente -CN, -SO₂X, 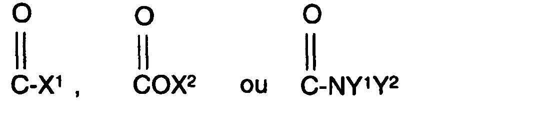 où X, X¹, X², Y¹ et Y² représentent indépendamment les uns des autres C₁-C₆-alkyle, C₅-C₇-cycloalkyle, C₁ à C₃-alkylphényle ou phényle ou naphtyle éventuellement substitué,
où
Y¹ et Y² peuvent former en outre avec l'atome d'azote auxquels ils sont liés un hétérocycle saturé à 5-7 chaînons,
**caractérisé en ce que** l'on fait réagir un mélange d'un orthoformiate de trialkyle de formule (V) et d'un composé à méthylène actif de formule (VI)
CH(OR)₃ (V) 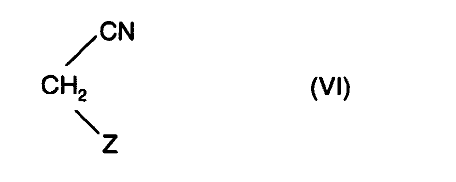
ou un composé acrylo de formule (VII) 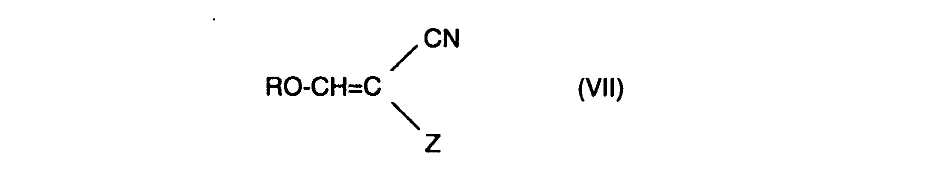 avec une amine de formule 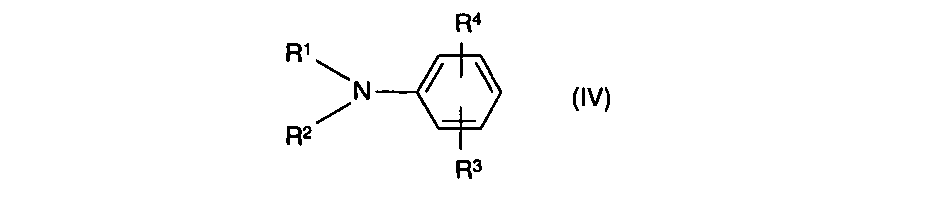 où R¹, R², R³ et R⁴ possèdent les significations indiquées ci-dessus.

2. Procédé selon la revendication 1 où le rapport molaire des composés IV : VII est 1 : 1,0 à 1 : 1,4, en particulier 1 : 1,0 à 1 : 1,1.

3. Procédé selon la revendication 1 **caractérisé en ce que** l'on obtient le composé de formule VII en faisant réagir des composés des formules (V) et (VI)
CH(OR)₃ (V),

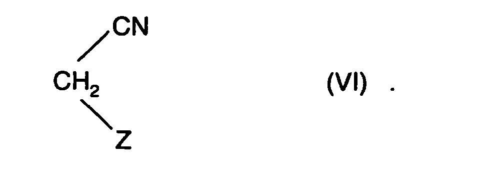

4. Procédé pour préparer des composés selon la revendication 1 **caractérisé en ce que** l'on fait réagir entre eux des composés des formules (IV), (V) et (VI) 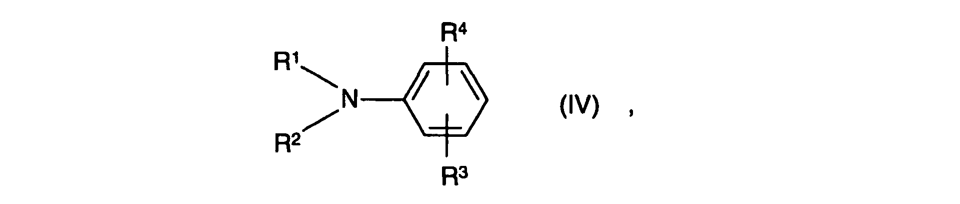
CH(OR)₃ (V), 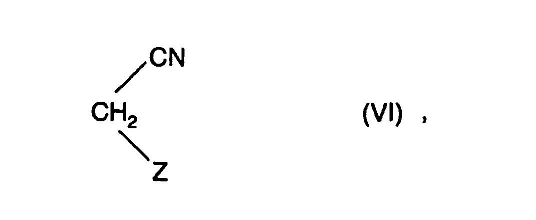
où
R représente C₁-C₆-alkyle, en particulier méthyle ou éthyle, et
R¹, R², R³, R⁴ et Z possèdent la signification indiquée dans la revendication 1.

5. Procédé selon les revendications 1 et 4 où le rapport molaire des composés IV : V : VI est 1 : 1 : 1 à 1 : 2,0 : 1,4, en particulier 1 : 1 : 1 à 1 : 1,3 : 1,2.

6. Procédé selon au moins l'une des revendications 1 à 5 **caractérisé en ce que** le procédé est mis en oeuvre dans un solvant organique ou dans un ou des orthoformiates.

7. Procédé selon au moins l'une des revendications 1 à 5 **caractérisé en ce que** le procédé se déroule à une température de 70 à 180°C, en particulier à 90 à 140°C.

8. Procédé selon au moins l'une des revendications 1 à 5 **caractérisé en ce que** le procédé se déroule en présence d'un catalyseur.

9. Procédé selon au moins l'une des revendications 1 à 8 **caractérisé en ce que** le procédé se déroule dans un solvant organique, à une température de 70 à 180°C, et en présence d'un catalyseur.
